# EUROPEAN PATENT SPECIFICATION

(11) **EP 1 433 679 B1**
(45) Date of publication and mention of the grant of the patent: **30.08.2006**
(21) Application number: 03028852.6
(22) Date of filing: 16.12.2003
(51) Int. Cl.: B60T 7/04, B60T 11/16, F16C 11/06

(54) **A device for engaging the brake pedal of a motor vehicle to the push-rod of the power brake**
Vorrichtung zum Verbinden des Bremspedals eines Kraftfahrzeuges an den Betätigungsstössel der Servobremse
Dispositif pour engager la pédale de frein d'un véhicule automobile au poussoir du système de freinage assisté

(30) Priority: 23.12.2002 IT TO20020226 U
(43) Date of publication of application: 30.06.2004
(73) Proprietor: I.M.A.M. S.p.A., 10040 Volvera (TO) (IT)
(72) Inventor: La Rosa, Giacomo, 90144 Palermo (IT); Cavaglia', Renato, 10040 Volvera (Torino) (IT); Ballari, Marco, 10040 Gerbole di Volvera (Torino) (IT)
(74) Representative: Di Francesco, Gianni

(56) References cited:
- EP-A- 0 800 010
- DE-U- 29 707 987
- FR-A- 2 786 233
- US-A- 3 863 519

## Description

The present invention relates to a device for engaging the brake pedal of a motor vehicle to the push-rod of the power brake.

Currently known are systems for connecting the pedal to the push-rod which envisage elastic means for fast installation that enable snap-action connection, with the aid of a spring clip, of the spherical end of the push-rod of the power brake, in a hemispherical seat made of plastic material fixed to the aforesaid pedal, as known from FR 2 786 233 A1.

The above type of device involves the problem that, if on the one hand the spherical shape of the end of the push-rod enables quite a convenient insertion thereof in the installation means located on the pedal, on the other it does not oppose sufficient resistance to prevent said end from coming out. It may in fact be sufficient to exert a moderate thrust under the pedal to slide the push-rod out of the seat and irreparably prevent use of the brake of the motor vehicle.

The purpose of the present invention is to provide a connection device that will overcome the aforesaid drawback.

The above and other purposes and advantages, which will emerge more clearly from what follows, are achieved according to the invention by a device for engaging the brake pedal of a motor vehicle to the push-rod of the power brake, said device presenting the characteristics specified in claim one.

There now follows a description of the structural and functional characteristics of a preferred, but non-limiting, embodiment of the device according to the invention.

Reference is made to the attached drawings, in which:

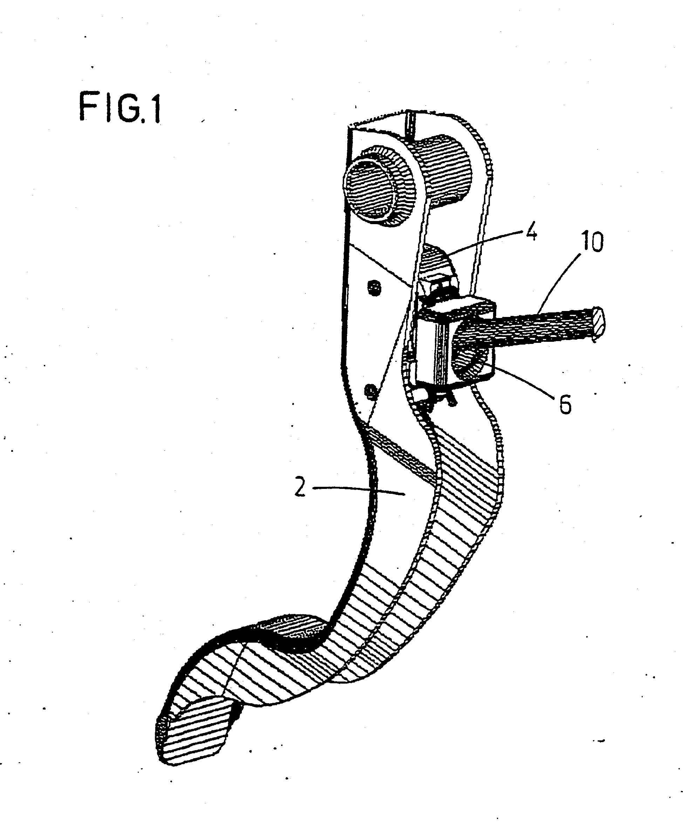

- Figure 1 is a perspective view of a brake pedal of a motor vehicle with the device for engaging the push-rod mounted in the operative position;

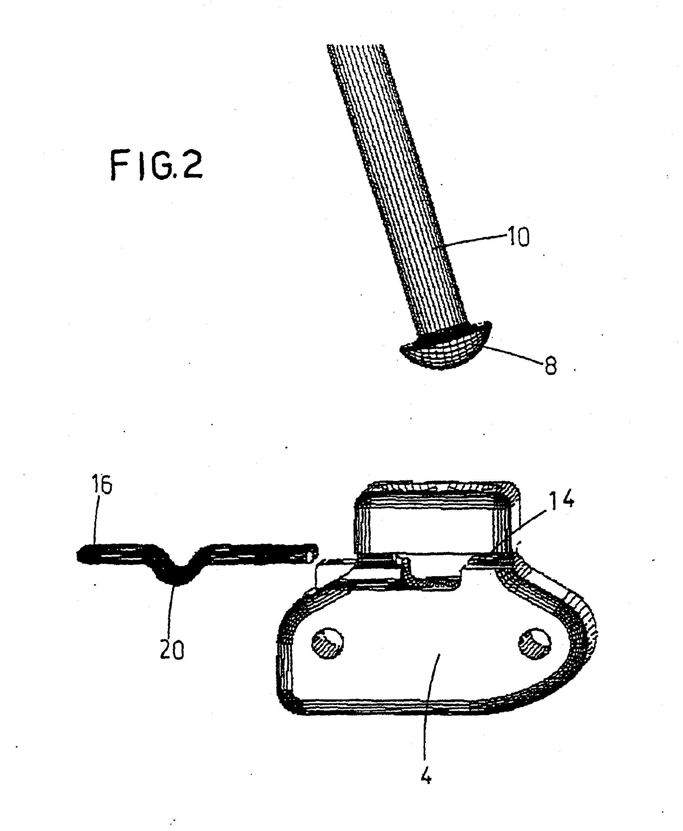

- Figure 2 is an exploded view of the engagement device and of the end of the push-rod of the power brake;

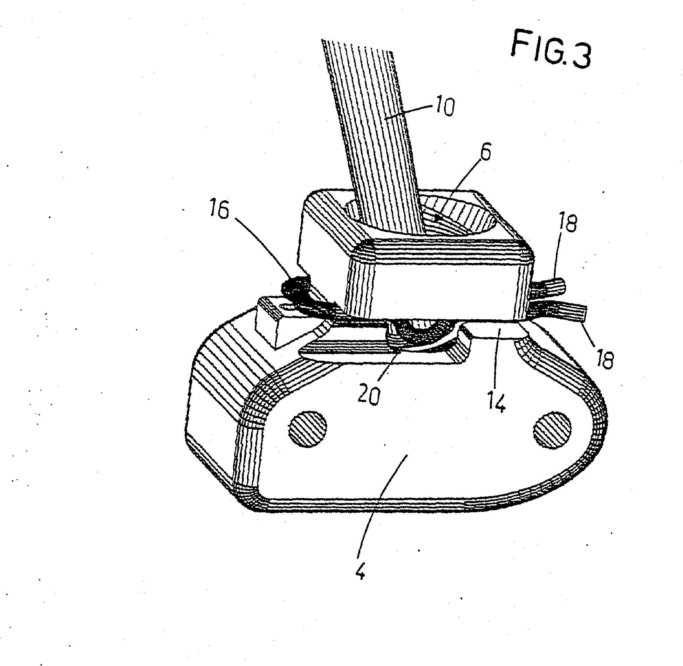

- Figure 3 is a side perspective view of the engagement device assembled and with the push-rod inserted therein; and

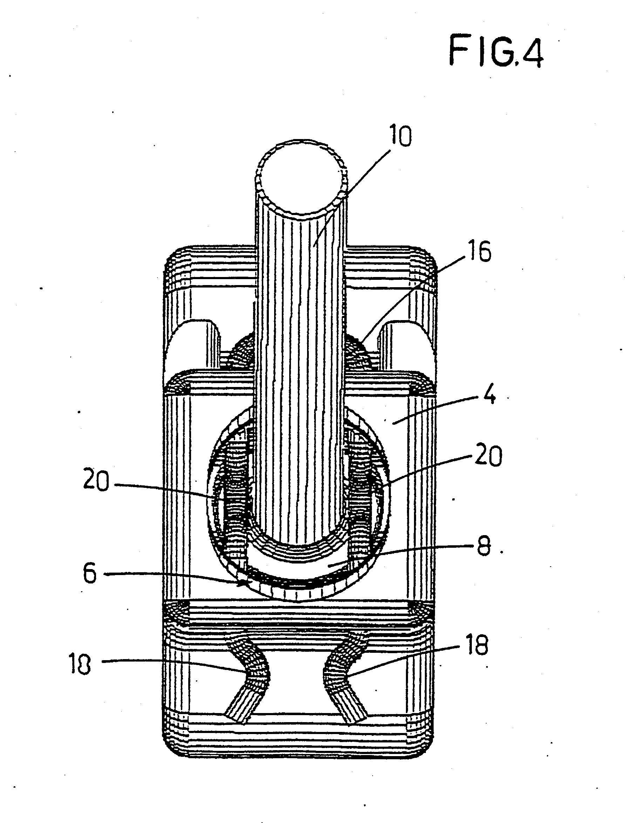

- Figure 4 is a view from above of the device of Figure 3, once again with the push-rod in the operative position.

With reference to the figures, the reference number 2 designates a brake pedal of a motor vehicle, in which there is fixed, by means of through screws (not illustrated), a support 4, which basically has a parallelepipedal shape and is provided with a cylindrical seat 6 having a hemispherical base, designed to receive one end 8 of the push-rod 10, said end being mushroom-shaped.

In the support 4 there is made a notch-shaped bilateral seat 14 for a U-shaped steel spring clip 16. The terminal parts of the branches of the U form two symmetrically opposed curved areas 18 with the concavity facing outwards, which are designed to fix the spring clip in position once it has been inserted in the bilateral seat 14.

Each of the two branches of the spring clip moreover has, in a basically central position, an additional curved area 20 which faces the base of the cylindrical seat 6 when the spring clip is mounted in the operative position on the support 4.

The curved areas 20 of the spring clip, in use, rest against the flat bottom part of the mushroom-shaped head of the push-rod, and on the one hand prevent it from coming out of the seat 6, unless a strong tensile force is exerted thereon, whilst on the other hand they in any case enable extraction of the push-rod, once a strong tensile force is exerted, which would be very difficult if the branches of the spring clip were rectilinear, i.e., without any curved areas 20.

## Claims

1. A device for engaging the brake pedal of a motor vehicle to the push-rod of the power brake, comprising said pushrod, a U-shaped spring clip and a support (4) provided with a seat (6) designed to receive, in snap-action fashion by means of the U-shaped spring clip (16), the end of the push-rod (10) of the power brake and to withhold it against a force that would tend to pull it out, said device being **characterized in that** each branch of the spring clip (16) has, in a basically central position, a curved area (20) facing the base of said cylindrical seat when the spring clip is in the operative position, said curved areas being designed to co-operate with the flat part of the end of the push-rod, said end being mushroom-shaped.

2. The device according to Claim 1, **characterized in that** the support (4) is basically parallelepipedal in shape and has means for fixing it to the brake pedal.

3. The device according to Claim 1, **characterized in that** the spring clip (16) is housed in a bilateral notched seat in the support (4).

## Patentansprüche

1. Eine Vorrichtung zum In-Eingriff-Bringen des Bremspedals eines Kraftfahrzeugs mit der Stößelstange des Bremskraftverstärkers, aufweisend: die Stößelstange, einen U-förmigen Federbügel und eine Auflage (4) mit einem Sitz (6), der dafür vorgesehen ist, in der Art einer Schnappverbindung mit Hilfe des U-förmigen Federbügels (16) das Ende der Stößelstange (10) des Bremskraftverstärkers aufzunehmen und ihn gegen eine Kraft zurückzuhalten, die dazu tendieren würde, ihn herauszuziehen, wobei diese Vorrichtung **dadurch gekennzeichnet ist, dass** jeder Arm des Federbügels (16) in einer im Grunde zentralen Position einen gebogenen Bereich (20) aufweist, welcher der Basis des zylindrischen Sitzes zugewandt ist, wenn sich der Federbügel in der Betriebsposition befindet, wobei die gebogenen Bereiche dafür vorgesehen sind, mit dem flachen Teil des Endes der Stößelstange zusammenzuwirken, wobei dieses Ende pilzförmig ist.

2. Die Vorrichtung nach Anspruch 1, **dadurch gekennzeichnet, dass** die Auflage (4) im Grunde parallelepipedisch ist und Mittel für ihre Befestigung am Bremspedal aufweist.

3. Die Vorrichtung nach Anspruch 1, **dadurch gekennzeichnet, dass** der Federbügel (16) in einem zweiseitigen gekerbten Sitz in der Auflage (4) angeordnet ist.

## Revendications

1. Dispositif pour engager la pédale de frein d'un véhicule automobile au poussoir du système de freinage assisté, comprenant ledit poussoir, une agrafe élastique en U et un support (4) muni d'un siège (6) conçu pour recevoir, en fixation immédiate au moyen de l'agrafe élastique en U (16), l'extrémité du poussoir (10) du système de freinage assisté et soutenir celle-ci contre une force qui tendrait à la pousser vers l'extérieur, ledit dispositif étant **caractérisé en ce que** chaque branche de l'agrafe élastique (16) possède, dans une position fondamentalement centrale, une zone incurvée (20) faisant face à la base dudit siège cylindrique lorsque l'agrafe élastique est dans la position opérationnelle, lesdites zones incurvées étant conçues pour coopérer avec la partie plane de l'extrémité du poussoir, ladite extrémité étant en forme de champignon.

2. Dispositif selon la revendication 1, **caractérisé en ce que** le support (4) a une forme fondamentalement parallélépipède et possède des moyens de fixation à la pédale de frein.

3. Dispositif selon la revendication 1, **caractérisé en ce que** l'agrafe élastique (16) est logée dans un siège à entailles bilatérales dans le support (4).
